# EUROPÄISCHE PATENTSCHRIFT

(11) **EP 3 150 058 B1**
(45) Veröffentlichungstag und Bekanntmachung des Hinweises auf die Patenterteilung: **10.04.2019**
(21) Anmeldenummer: 16177708.1
(22) Anmeldetag: 04.07.2016
(51) Int. Cl.: A01F 12/30, A01F 12/44

(54) **MÄHDRESCHER**
COMBINE HARVESTER
MOISSONNEUSE-BATTEUSE

(30) Priorität: 01.10.2015 DE 102015116655
(43) Veröffentlichungstag der Anmeldung: 05.04.2017
(73) Patentinhaber: CLAAS Selbstfahrende Erntemaschinen GmbH, 33428 Harsewinkel (DE)
(72) Erfinder: Diekamp, Andreas, 49176 Hilter (DE); Schwarz, Michael, 48361 Beelen (DE)
(74) Vertreter: CLAAS Gruppe

(56) Entgegenhaltungen:
- EP-A1- 1 321 023
- WO-A1-2015/062965
- BE-A- 733 346
- US-A- 4 149 360

## Beschreibung

Die Erfindung betrifft einen Mähdrescher mit den Merkmalen des Oberbegriffs von Anspruch 1.

Es sind im Stand der Technik verschiedene Mähdrescher bekannt. Sie dienen der Maat und dem Drusch von Körnerfrüchten. Sie gewinnen mit einem Dreschwerk aus dem durch das Schneidwerk aufgenommenen Erntegut Korngut.

Im Dreschwerk wird das Korn durch eine im Prinzip wälzende Bearbeitung aus dem Stroh gerieben - ausgedroschen - und vom übrigen Erntegutstrom getrennt, so dass es direkt der Reinigung zugeführt werden kann. Der gedroschene Erntegutstrom wird der Trenneinrichtung zugeführt, durch welche noch im Erntegutstrom verbliebenes Korn von dem Erntegutstrom getrennt und danach ebenfalls der Reinigung zugeführt wird. Das Korngut wird im Anschluss an die Reinigung einem Getreidetank zugeführt.

Als weitere Bestandteile des Ernteguts bleiben Nichtkornbestandteile übrig, wie z.B. die Spreu und das Stroh. Diese werden entweder über das Feld verteilt, oder -im Falle des Strohs - auf Schwad gelegt. Der Schwad kann im Anschluss durch eine Ballenpresse aufgenommen werden.

Aus der WO 2015/062965 A1 ist ein Mähdrescher mit einem Dreschwerk und einer Trenneinrichtung bekannt. Unterhalb der Trenneinrichtung sind bei diesem Mähdrescher zwei Rückfördereinrichtungen in Form von Rücklaufböden vorgesehen, welche das in der Trenneinrichtung abgeschiedene Korngut einem Vorbereitungsboden zuführen, über welchen dieses als ein Gutstrom zur Reinigungseinrichtung transportiert wird. Bei diesen Mähdreschern ist die Reinigungseinrichtung in der Regel das leistungsbegrenzende Arbeitsorgan.

Die der Erfindung zugrunde liegende Aufgabe besteht darin, den aus dem Stand der Technik bekannten Mähdrescher so weiterzuentwickeln und zu verbessern, dass die Leistungsfähigkeit des Mähdreschers und insbesondere die Leistungsfähigkeit der Reinigungseinrichtung erhöht wird.

Die obige Aufgabe wird bei einem Mähdrescher mit den Merkmalen des Oberbegriffs von Anspruch 1 durch die Merkmale des kennzeichnenden Teils von Anspruch 1 gelöst.

Wesentlich für die Erfindung ist, dass vom Dreschwerk kommend ein Dreschwerkteilgutstrom einer Trenneinrichtung zum Abscheiden von Korngut aus dem gedroschenen Erntegut zugeführt wird, und dass von der Trenneinrichtung kommend ein Trenneinrichtungsteilgutstrom über eine Rückfördereinrichtung, insbesondere einen Rücklaufboden, zum Fördern des Trenneinrichtungsteilgutstroms zu einem Vorbereitungsboden und über den Vorbereitungsboden der Reinigungseinrichtung zugeführt wird, und, dass zusätzlich ein Trenneinrichtungsteilgutstrom am Vorbereitungsboden vorbei der Trenneinrichtung kommend der Reinigungseinrichtung zugeführt wird.

Durch die vorgeschlagene Lösung, nämlich einen Trenneinrichtungsteilgutstrom von der Trenneinrichtung kommend über die Rückfördereinrichtung zur Vorbereitung dem Vorbereitungsboden zuzuführen und einen weiteren Trenneinrichtungsteilgutstrom von der Trenneinrichtung, welcher weniger einer Vorbereitung durch den Vorbereitungsboden bedarf, der Reinigungseinrichtung direkt zuzuführen, kann der Vorbereitungsboden den über ihn geführten Gutstrom besser für die Reinigungsvorrichtung vorbereiten, insbesondere besser verteilen. Die Vorbereitung der Gutströme bzw. des Gesamtgutstroms in die Reinigungsvorrichtung wird hierdurch insgesamt verbessert, so dass die Leistungsfähigkeit der Reinigungseinrichtung erhöht wird.

In den Ansprüchen 2 bis 9 werden vorteilhafte Ausgestaltungen der Rückfördereinrichtung, insbesondere des Rücklaufbodens, beschrieben. Durch diese lassen sich die Gutströme bzw. der Gesamtgutstrom zur Reinigungseinrichtung weiter verbessern und damit die Leistungsfähigkeit des Mähdreschers, insbesondere der Reinigungseinrichtung, weiter steigern.

Die Ansprüche 10 bis 13 befassen sich mit weiteren vorteilhaften Ausgestaltungen der Gutströme im Mähdrescher und der Reinigungseinrichtung selbst. Die Merkmale dieser Ansprüche erlauben einzeln oder in Kombination eine weitere Steigerung der Leistungsfähigkeit der Reinigungseinrichtung.

Im Folgenden wird die Erfindung anhand einer lediglich ein Ausführungsbeispiel darstellenden Zeichnung näher erläutert, indem weitere Einzelheiten, Merkmale, Ziele und Vorteile beschrieben werden. In der Zeichnung zeigt
- Fig. 1: einen vorschlagsgemäßen Mähdrescher in einer schematischen Darstellung, in der die inneren Gutströme dargestellt sind und
- Fig. 2: die Rückfördereinrichtung des in Fig. 1 gezeigten Mähdreschers a) in einer ersten Ausgestaltung und b) in einer zweiten Ausgestaltung.

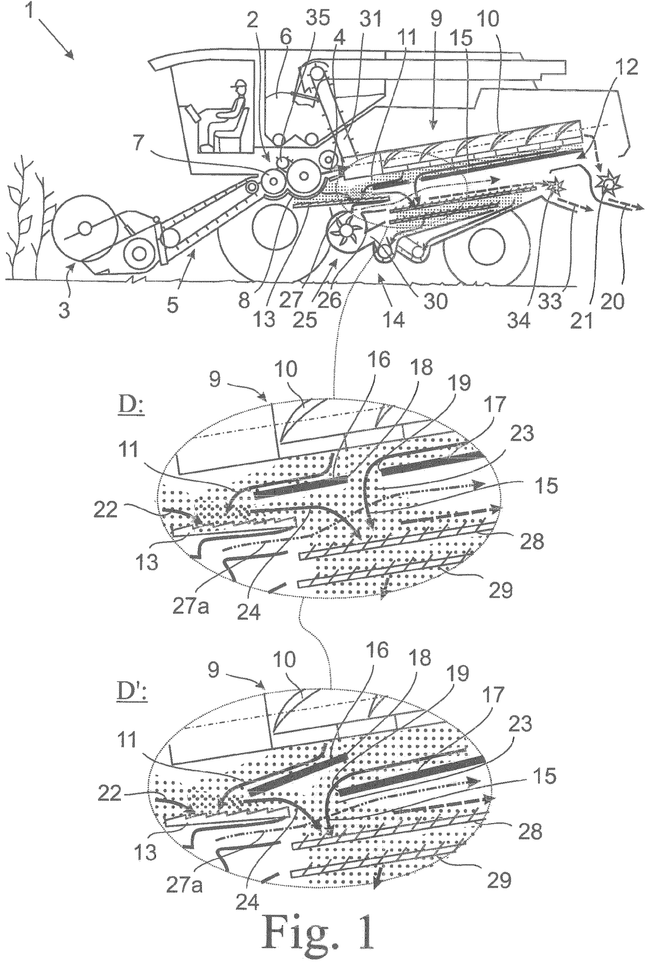

In der Fig. 1 ist ein vorschlagsgemäßer Mähdrescher 1 dargestellt. Der Mähdrescher 1 mäht einen Feldbestand mit seinem Schneidwerk 3. Das so gewonnene Erntegut wird von einem Schrägförderer 5 aufgenommen und einem Dreschwerk 2 zugeführt. Das Dreschwerk 2 dient dem Dreschen des aufgenommenen Ernteguts zu Korngut 6.

Unter dem Erntegut ist dabei das gesamte vom Feldbestand aufgenommene und dem Dreschwerk 2 zugeführte Material zu verstehen. Als Korngut 6 werden die von dem Mähdrescher 1 aus dem Erntegut zu gewinnenden Körner bezeichnet.

Das Dreschwerk 2 weist hier und vorzugsweise eine Dreschtrommel 7 auf, welche mit einem Dreschkorb 8 zusammenwirkt. Die Rotationsachse der Dreschtrommel 7 ist hier und vorzugsweise quer zur Fahrtrichtung ausgerichtet. Vom Dreschwerk 2 kommend wird vorschlagsgemäß ein Dreschwerksteilgutstrom 4 einer Trenneinrichtung 9 zum Ausscheiden von Korngut 6 aus dem gedroschenem Erntegut zugeführt.

Der Dreschwerksteilgutstrom 4 besteht aus dem gedroschenen Erntegut. Dieses weist einen Kornanteil und einen Nichtkornanteil auf, wobei der Nichtkornanteil sich vorwiegend aus Stroh und Spreu zusammensetzt.

Im Ausführungsbeispiel und vorzugsweise weist die Trenneinrichtung 9 beim Abscheiden von Korngut 6 mindestens einen Trennrotor 10 auf. Zusätzlich oder alternativ kann die Trenneinrichtung 9 einen Hordenschüttler zum Abscheiden von Korngut 6 aufweisen.

Von der Trenneinrichtung 9 kommend wird ein Trenneinrichtungsteilgutstrom 11 über eine Rückfördereinrichtung 12 zum Fördern des Trenneinrichtungsteilgutstroms 11 zu einem Vorbereitungsboden 13 und über den Vorbereitungsboden 13 der Reinigungseinrichtung 14 zugeführt. Der Vorbereitungsboden 13 ist hier und vorzugsweise als Rüttelboden ausgebildet. Er ist vorzugsweise antreibbar.

Vorschlagsgemäß wird ein weiterer Trenneinrichtungsteilgutstrom 15 am Vorbereitungsboden 13 vorbei von der Trenneinrichtung 9 kommend der Reinigungseinrichtung 14 zugeführt.

Die Erfindung hat erkannt, dass sich die Leistungsfähigkeit der Reinigungseinrichtung 14, insbesondere hinsichtlich der Reinigungsleistung und/oder der Reinigungskapazität, erhöhen lässt, wenn ein Trenneinrichtungsteilgutstrom 15 am Vorbereitungsboden 13 vorbei zur Reinigungseinrichtung 14 geführt wird. Hierdurch kann der über den Vorbereitungsboden 13 geführte Gutstrom besser aufbereitet werden. Die Qualität bzw. Verteilung des Gesamtgutstroms bzw. der Gutströme in die Reinigungseinrichtung 14 wird in der Weise verbessert, dass insgesamt eine bessere Reinigungsqualität und/oder Reinigungskapazität der Reinigungseinrichtung 14 und damit eine höhere Leistungsfähigkeit der Reinigungseinrichtung 14 erreicht wird.

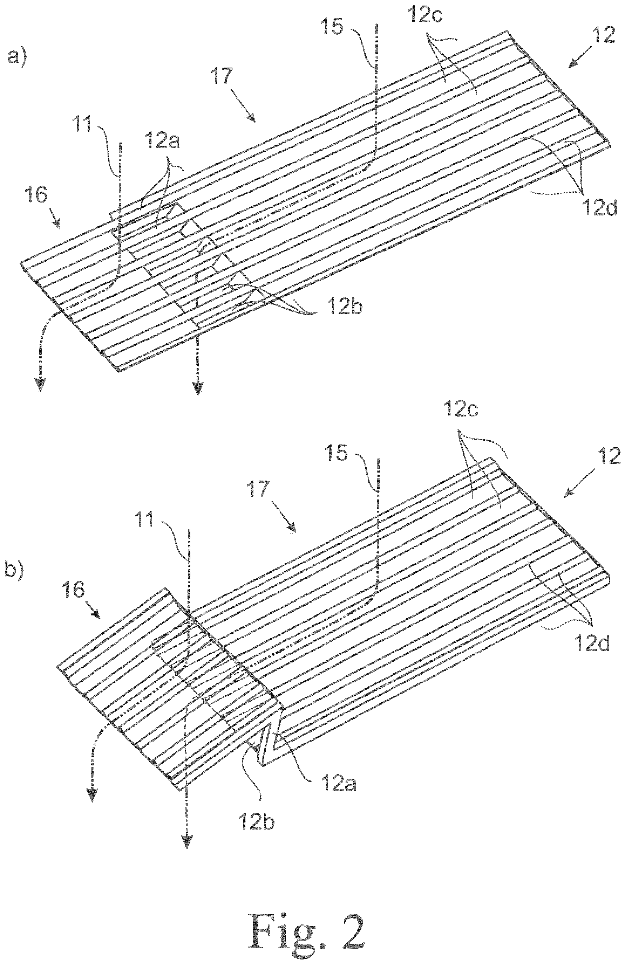

In den Zeichnungen der Fig. 1 und 2 sind zwei unterschiedliche Varianten eines vorschlagsgemäßen Mähdreschers 1 gezeigt, welche sich hinsichtlich der Ausgestaltung der Rückfördereinrichtung 12 unterscheiden. In der Fig. 1 und der Detailansicht D ist ein vorschlagsgemäßer Mähdrescher 1 gemäß einer ersten Ausgestaltung der Rückfördereinrichtung 12 gezeigt. In der Detailansicht D' ist die Detailansicht D eines Mähdreschers gemäß Fig.1 mit einer alternativen vorschlagsgemäßen Rückfördereinrichtung 12 gezeigt. In der Fig. 2a ist die Rückfördereinrichtung 12 gemäß Detailansicht D und in der Fig. 2b die Rückfördereinrichtung 12 gemäß Detailansicht D' gezeigt.

Die Rückfördereinrichtung 12 dient dem Fördern eines Gutstroms, insbesondere einschließlich des Kornguts 6 im Gutstrom entgegen der Fahrtrichtung des Mähdreschers 1. Hier und vorzugsweise fördert die Rückfördereinrichtung 12 die beiden Trenneinrichtungsteilgutströme 11, 15 entgegen der Fahrtrichtung des Mähdreschers 1. Die Rückfördereinrichtung 12 ist vorzugsweise zweiteilig ausgebildet. Auf diese Weise lassen sich die beiden Trenneinrichtungsteilgutströme besonders einfach erzeugen.

Hier und vorzugsweise weist die Rückfördereinrichtung 12 einen ersten Teil 16 auf, über den der über den Vorbereitungsboden 13 geführte Trenneinrichtungsteilgutstrom 11 zum Vorbereitungsboden 13 und über den Vorbereitungsboden 13 zur Reinigungseinrichtung 14 geführt wird, und einen zweiten Teil 17 auf, über den der am Vorbereitungsboden 13 vorbeigeführte Trenneinrichtungsteilgutstrom 15 zur Reinigungseinrichtung 14 geführt wird.

Eine bevorzugte alternative zweiteilige Rückfördereinrichtung 12 ist in der Fig. 2 gezeigt. Hier und vorzugsweise ist der zweite Teil 17 der Rückfördereinrichtung 12 in Fahrtrichtung hinter dem ersten Teil 16 der Rückfördereinrichtung 12 angeordnet.

In den Ausführungsbeispielen und vorzugsweise ist die Rückfördereinrichtung 12 ein Rücklaufboden. Auch dieser kann wie in der Fig. 2 dargestellt zweiteilig ausgebildet sein und einen ersten Teil 16 und einen zweiten Teil 17 aufweisen. Vorzugsweise ist die Rückfördereinrichtung 12 und/oder der Rücklaufboden als Rüttelboden ausgebildet.

Die beiden Teile 16, 17 der Rückfördereinrichtung 12 können, wie in den Ausführungsbeispielen dargestellt miteinander verbunden, oder, wie nicht dargestellt, vollständig voneinander getrennt ausgebildet sein. In den Ausführungsbeispielen sind der erste Teil 16 und der zweite Teil 17 der Rückfördereinrichtung 12 über Streben 12a verbunden.

Die beiden Teile 16, 17 der Rückfördereinrichtung 12 werden vorzugsweise von einem gemeinsamen Antrieb angetrieben.

Zusätzlich oder alternativ können, wie in der Fig. 1 in der Detailansicht D und der Fig. 2a gezeigt, die beiden Teile 16, 17 der Rückfördereinrichtung 12 die gleiche Steigung zueinander aufweisen.

Vorzugsweise weisen der erste Teil 16 der Rückfördereinrichtung 12 und der zweite Teil 17 der Rückfördereinrichtung 12 jedoch eine unterschiedlich starke Steigung auf, wie dies in der Fig. 1 in der Detailansicht D' und der Fig. 2b gezeigt ist. Dabei ist vorzugsweise, wie auch in Fig. 2b gezeigt, die Steigung des ersten Teils 16 der Rückfördereinrichtung 12 größer als die Steigung des zweiten Teils 17 der Rückfördereinrichtung 12.

Vorzugsweise sind, wie in der Fig. 2 gezeigt, die sich zugewandten Enden 18, 19 des ersten Teils 16 der Rückfördereinrichtung 12 und des zweiten Teils 17 der Rückfördereinrichtung 12, insbesondere in Fahrtrichtung des Mähdreschers 1 und/oder in der Höhe, beabstandet zueinander angeordnet. Auf diese Weise wird vorzugsweise eine Öffnung 12b für den am Vorbereitungsboden 13 vorbeigeführten Trenneinrichtungsteilgutstrom 15 bereitgestellt. Es können auf diese Weise auch mehrere Öffnungen 12b für den am Vorbereitungsboden 13 vorbeigeführten Trenneinrichtungsteilgutstrom 15 bereitgestellt werden.

Zusätzlich oder alternativ können sich der erste Teil 16 der Rückfördereinrichtung 12 und der zweite Teil 17 der Rückfördereinrichtung 12 an ihren sich zugewandten Enden 18, 19, insbesondere in Fahrtrichtung des Mähdreschers 1, überlappen, wie dies bspw. in der Fig. 2b. gezeigt ist. Hier und vorzugsweise ist der zweite Teil 17 der Rückfördereinrichtung 12 länger als der erste Teil 17 der Rückfördereinrichtung 12.

Um eine gute Verteilung zwischen den beiden Trenneinrichtungsteilgutströmen 11, 15 zu erzielen, hat es sich bewährt, wenn der zweite Teil 17 der Rückfördereinrichtung 12 mindestens doppelt so lang ist, vorzugsweise mindestens dreimal so lang ist, weiter vorzugsweise mindestens viermal so lang ist, wie der erste Teil 16 der Rückfördereinrichtung 12.

Hier und vorzugsweise weist die Rückfördereinrichtung 12, insbesondere der erste Teil 16 und/oder der zweite Teil 17, Rinnen 12c auf, in denen die Gutströme gefördert werden. Die Rinnen 12c werden bevorzugt durch Trennwände 12d gebildet. Die Trennwände 12d können vorzugsweise durch Streben, insbesondere die Streben 12a, bereitgestellt werden.

Um die Leistungsfähigkeit der Reinigungseinrichtung 14 weiter steigern zu können, ist es vorteilhaft, wenn der am Vorbereitungsboden 13 vorbeigeführte Trenneinrichtungsteilgutstrom 15, insbesondere durch den zweiten Teil der Rückfördereinrichtung 12, regelbar ist. Auf diese Weise kann auf einfache Art der Gesamtgutstrom zur Reinigungseinrichtung 14 geregelt und/oder hinsichtlich seiner Zusammensetzung optimiert werden. Zur Regelung des am Vorbereitungsboden 13 vorbeigeführten Trenneinrichtungsteilgutstroms 15 durch den zweiten Teil 17 der Rückfördereinrichtung 12 hat es sich bewährt, wenn die Steigung des zweiten Teils 17 der Rückfördereinrichtung 12 verstellbar ist.

Zusätzlich oder alternativ kann der am Vorbereitungsboden 13 vorbeigeführte Trenneinrichtungsteilgutstrom 15 auch vor Erreichen der Rückfördereinrichtung 12 durch die Trenneinrichtung 9 geregelt werden, bspw. durch Klappen am Ausgang oder Teilen des Ausgangs der Trennvorrichtung 9.

Vorteilhaft und bevorzugt ist es zudem, wenn der über den Vorbereitungsboden 13 geführte Trenneinrichtungsteilgutstrom 11 einen höheren Kornanteil aufweist, als der am Vorbereitungsboden 13 vorbeigeführte Trenneinrichtungsteilgutstrom 15. Als nicht Kornbestandteil können die beiden Trenneinrichtungsteilgutströme 11, 15 insbesondere Spreu und Kurzstroh, aufweisen.

Vorzugsweise weist der über den Vorbereitungsboden 13 geführte Trenneinrichtungsteilgutstrom 11 absolut gesehen mehr Korngut auf, als der am Vorbereitungsboden 13 vorbeigeführte Trenneinrichtungsteilgutstrom 15.

Ein weiterer Gutstrom 20 aus der Trenneinrichtung 9 wird einem Häcksler 21 zugeführt. Dieser weitere Gutstrom 20 besteht vorwiegend aus Stroh. Er kann jedoch auch noch einen Spreuanteil und/oder geringen Kornanteil aufweisen. Das Stroh aus diesem Gutstrom 20 wird vorzugsweise durch einen Häcksler 21 beim Verlassen des Mähdreschers 1 verarbeitet.

Neben dem Dreschwerksteilgutstrom 4 vom Dreschwerk 2 kommend zur Trenneinrichtung 9 wird hier und vorzugsweise ein Dreschwerksteilgutstrom 22 vom Dreschwerk 2 kommend an der Trenneinrichtung 9 vorbei zum Vorbereitungsboden 13 und über den Vorbereitungsboden 13 der Reinigungseinrichtung 14 zugeführt. Dieser weist vorzugsweise einen höheren Kornanteil als die Trennvorrichtungsteilgutströme 11, 15 auf. Vorzugsweise weist der Dreschwerksteilgutstrom 22, der vom Dreschwerk 2 kommend an der Trenneinrichtung 9 vorbei zum Vorbereitungsboden 13 verläuft, absolut gesehen mehr Korngut auf, als die Trenneinrichtungsteilgutströme 11, 15 jeweils einzeln, vorzugsweise, als die Trenneinrichtungsteilgutströme 11, 15 zusammengenommen.

Wie in der Fig. 1 erkennbar ist, wird der an der Trennvorrichtung 9 vorbei geführte Dreschwerksteilgutstrom 22 in Fahrtrichtung des Mähdreschers 1 vor dem dem Vorbereitungsboden 13 zugeführten Trenneinrichtungsteilgutstrom 11 dem Vorbereitungsboden 13 zugeführt. Hier und vorzugsweise werden der an der Trennvorrichtung 9 vorbeigeführte Dreschwerksteilgutstrom 22 und der dem Vorbereitungsboden 13 zugeführte Trenneinrichtungsteilgutstrom 11 als ein gemeinsamer Gutstrom der Reinigungseinrichtung 14 zugeführt.

Wie der Fig. 1 weiter zu entnehmen ist, weist der Mähdrescher 1 eine Fallstufe 23 auf, über die der Gutstrom 24 von dem Vorbereitungsboden 13 zur Reinigungseinrichtung 14 und der am Vorbereitungsboden 13 vorbeigeführte Trenneinrichtungsteilgutstrom 15 der Reinigungseinrichtung 14 gemeinsam zugeführt werden. Vorzugsweise verläuft der Gutstrom 24 von dem Vorbereitungsboden 13 zur Reinigungseinrichtung 14 dichter an einem Reinigungsgebläse 25 der Reinigungseinrichtung 14 als der am Vorbereitungsboden 13 vorbeigeführte Trenneinrichtungsteilgutstrom 15.

Bei einer solchen Ausgestaltung sind die relativ leichten Nichtkornbestandteile im Mittel weiter entfernt vom Reinigungsgebläse 25 als das relativ schwere Korngut, so dass ein Großteil der Nichtkornbestandteile leichter weggeblasen werden kann, ohne mit Kornbestandteilen zu kollidieren.

Die Reinigungseinrichtung 14 weist hier und vorzugsweise neben dem Reinigungsgebläse 25 ein Gehäuse 26 mit einem Gebläseausgang 27 auf. Der Gebläseausgang 27 ist vorzugsweise auf den in die Reinigungseinrichtung 14 eintretenden Gutstrom gerichtet. Weiter vorzugsweise werden durch das Reinigungsgebläse 25, insbesondere über den aus dem Gebläseausgang 27 austretenden Luftstrom 27a, bereits Nichtkornbestandteile des der Reinigungseinrichtung 14 zugeführten Gutstroms vor dem Erreichen der Reinigungseinrichtung 14 abgeschieden. Hierdurch wird die Leistungsfähigkeit der Reinigungseinrichtung 14 weiter gesteigert, da bereits weniger Spreu und/oder Kurzstroh in die Reinigungseinrichtung 14 gelangt.

Vorzugsweise weist die Reinigungseinrichtung 14 Siebe 28, 29 auf, durch die das Korngut in der Reinigungseinrichtung 14 gesiebt wird. Auf die Siebe 28, 29, vorzugsweise zwei Siebe 28, 29, ist ein weiterer Gebläseausgang 30 gerichtet. Vorzugsweise ist der auf die Siebe 28, 29 gerichtete Gebläseausgang 30 größer als der auf den in die Reinigungseinrichtung 14 eintretenden Gutstrom gerichtete Gebläseausgang 27.

Das Korngut 6 wird von der Reinigungseinrichtung 14 nach dem Sieben von einer Fördereinrichtung 31 in den Korntank 32 gefördert. Aus der Reinigungseinrichtung 14 werden Spreu und Kurzstroh in einem Gutstrom 33 ausgeschieden. Der Gutstrom 33 mit dem Spreu und dem Kurzstroh wird vorzugsweise vor dem Austreten aus dem Mähdrescher 1 von einem Häcksler 34 gehäckselt. Eine weitere Fördereinrichtung 35 fördert noch nicht ausgedroschener Früchte im Rahmen der Überkehr von der Reinigungseinrichtung 14 zum Dreschwerk 2.

### Bezugszeichenliste

- 1: Mähdrescher
- 2: Dreschwerk
- 3: Schneidwerk
- 4: Dreschwerksteilgutstrom
- 5: Schrägförderer
- 6: Korngut
- 7: Dreschtrommel
- 8: Dreschkorb
- 9: Trenneinrichtung
- 10: Trennrotor
- 11: Teilgutstrom
- 12: Rückfördereinrichtung
- 12a: Streben
- 12b: Öffnung
- 12c: Rinnen
- 12d: Trennwände
- 13: Vorbereitungsboden
- 14: Reinigungseinrichtung
- 15: Trenneinrichtungsteilgutstrom
- 16: erster Teil der Rückfördereinrichtung
- 17: zweiter Teil der Rückfördereinrichtung
- 18: hinteres Ende des ersten Teils der Rückfördereinrichtung
- 19: vorderes Ende des zweiten Teils der Rückfördereinrichtung
- 20: Gutstrom
- 21: Häcksler
- 22: Dreschwerksteilgutstrom
- 23: Fallstufe
- 24: Gutstrom vom Vorbereitungsboden
- 25: Reinigungsgebläse
- 26: Gehäuse
- 27: Gebläseausgang
- 28: Sieb
- 29: Sieb
- 30: Gebläseausgang
- 31: Fördereinrichtung zum Korntank
- 32: Korntank
- 33: Gutstrom
- 34: Häcksler
- 35: Fördereinrichtung zum Dreschwerk

## Patentansprüche

1. Mähdrescher (1) mit einem Dreschwerk (2), umfassend eine Dreschtrommel (7) und einen Dreschkorb (8) zum Dreschen von Korngut (6) aus dem aufgenommenem Erntegut,
wobei vom Dreschwerk (2) kommend ein Dreschwerksteilgutstrom (4) einer mindestens einen Trennrotor (10) oder einen Hordenschüttler aufweisenden Trenneinrichtung (9) zum Abscheiden von Korngut (6) aus dem gedroschenen Erntegut zuführbar ist,
wobei von der Trenneinrichtung (9) kommend ein Trenneinrichtungsteilgutstrom (11) über eine in Fahrtrichtung des Mähdreschers fördernde, als Rüttelboden ausgeführten Rückfördereinrichtung (12) zum Fördern des Trenneinrichtungsteilgutstroms (11) zu einem als antreibbaren Rüttelboden ausgeführten Vorbereitungsboden (13) und über den Vorbereitungsboden (13) der Reinigungseinrichtung (14) zuführbar ist,
**dadurch gekennzeichnet,**
**dass** zusätzlich ein Trenneinrichtungsteilgutstrom (15) am Vorbereitungsboden (13) vorbei von der Trenneinrichtung (9) kommend der Reinigungseinrichtung (14) direkt durch zumindest eine Öffnung (12b) in der Rückfördereinrichtung (12) zuführbar ist.

2. Mähdrescher (1) nach Anspruch 1, **dadurch gekennzeichnet, dass** die Rückfördereinrichtung (12) zweiteilig ausgebildet ist

3. Mähdrescher (1) nach Anspruch 2, **dadurch gekennzeichnet, dass** der über den Vorbereitungsboden (13) geführte Trenneinrichtungsteilgutstrom (11) über einen ersten Teil (16) der Rückfördereinrichtung (12) und anschließend über den Vorbereitungsboden (13) zuführbar ist und dass der am Vorbereitungsboden (13) vorbeigeführte Trenneinrichtungsteilgutstrom (15) über einen zweiten Teil (17) der Rückfördereinrichtung (12) zuführbar ist.

4. Mähdrescher (1) nach Anspruch 3, **dadurch gekennzeichnet, dass** der zweite Teil (17) der Rückfördereinrichtung (12) in Fahrtrichtung des Mähdreschers (1) hinter dem ersten Teil (16) der Rückfördereinrichtung (12) angeordnet ist.

5. Mähdrescher (1) nach Anspruch 3 oder 4, **dadurch gekennzeichnet, dass** der erste Teil (16) der Rückfördereinrichtung (12) und der zweite Teil (17) der Rückfördereinrichtung (12) eine unterschiedliche starke Steigung aufweisen, vorzugsweise, dass der erste Teil (16) der Rückfördereinrichtung (12) eine größere Steigung aufweist als der zweite Teil (17) der Rückfördereinrichtung (12).

6. Mähdrescher (1) nach einem der vorhergehenden Ansprüche, **dadurch gekennzeichnet, dass** der erste Teil (16) der Rückfördereinrichtung (12) und der zweite Teil (17) der Rückfördereinrichtung (12) sich an ihren sich zugewandten Enden (18, 19) überlappen.

7. Mähdrescher (1) nach einem der vorhergehenden Ansprüche, **dadurch gekennzeichnet, dass** der zweite Teil (17) der Rückfördereinrichtung (12) länger ist als der erste Teil (16) der Rückfördereinrichtung (12), vorzugsweise, dass der zweite Teil (17) der Rückfördereinrichtung (12) mindestens doppelt so lang ist wie der erste Teil (16) der Rückfördereinrichtung (12), weiter vorzugsweise, dass der zweite Teil (17) der Rückfördereinrichtung (12) mindestens dreimal so lang ist wie der erste Teil (16) der Rückfördereinrichtung (12).

8. Mähdrescher (1) nach einem der vorhergehenden Ansprüche, **dadurch gekennzeichnet, dass** der am Vorbereitungsboden (13) vorbeigeführte Trenneinrichtungsteilgutstrom (15) durch den zweiten Teil (17) der Rückfördereinrichtung (12) regelbar ist.

9. Mähdrescher (1) nach Anspruch 8, **dadurch gekennzeichnet, dass** die Steigung des zweiten Teils (17) der Rückfördereinrichtung (12) zur Regelung des am Vorbereitungsboden (13) vorbeigeführte Trenneinrichtungsteilgutstrom (15) verstellbar ist.

10. Mähdrescher nach einem der vorhergehenden Ansprüche, **dadurch gekennzeichnet, dass** der Mähdrescher (1) eine Fallstufe (23) aufweist und dass der Gutstrom (24) von dem Vorbereitungsboden (13) zur Reinigungseinrichtung (14) und der am Vorbereitungsboden (13) vorbeigeführte Trenneinrichtungsteilgutstrom (15) der Reinigungseinrichtung (14) über die gemeinsame Fallstufe (23) zugeführt werden.

11. Mähdrescher nach einem der vorhergehenden Ansprüche, **dadurch gekennzeichnet, dass** die Reinigungseinrichtung (14) ein Reinigungsgebläse (25) aufweist und in der Fallstufe (23) und/oder Reinigungseinrichtung (14) der Gutstrom (24) von dem Vorbereitungsboden (13) zur Reinigungseinrichtung (14) dichter an dem Reinigungsgebläse (25) der Reinigungseinrichtung (14) verläuft als der am Vorbereitungsboden (13) vorbeigeführte Trenneinrichtungsteilgutstrom (15).

12. Mähdrescher nach einem der vorhergehenden Ansprüche, **dadurch gekennzeichnet, dass** das Reinigungsgebläse (25) ein Gehäuse (26) mit einem Gebläseausgang (27) aufweist, welcher auf den in die Reinigungseinrichtung (14) eintretenden Gutstrom (24) gerichtet ist.

## Claims

1. A combine harvester (1) comprising a threshing unit (2) including a threshing drum (7) and a threshing concave (8) for threshing grain material (6) from the picked-up crop material, wherein coming from the threshing unit (2) a threshing unit partial material flow (4) can be fed to a separating device (9) which includes at least one threshing rotor (10) or a straw walker for separating grain material (6) from the threshed crop material,
wherein coming from the separating device (9) a separating device partial material flow (11) can be fed by way of a return conveyor device (12) which conveys in the direction of travel of the combine harvester and which is the form of a vibrator tray for conveying the separating device partial material flow (11) to a preparation tray (13) which is in the form of a drivable vibrator tray and by way of the preparation tray (13) to the cleaning device (14),
**characterised in that** a separating device partial material flow (15) can additionally be fed past the preparation tray (13) coming from the separating device (9) to the cleaning device (14) directly through at least one opening (12b) in the return conveyor device (12).

2. A combine harvester (1) according to claim 1 **characterised in that** the return conveyor device (12) is of a two-part configuration.

3. A combine harvester (1) according to claim 2 **characterised in that** the separating device partial material flow (11) guided by way of the preparation tray (13) can be fed by way of a first part (16) of the return conveyor device (12) and then by way of the preparation tray (13) and the separating device partial material flow (15) which is guided past the preparation tray (13) can be fed by way of a second part (17) of the return conveyor device (12).

4. A combine harvester 1) according to claim 3 **characterised in that** the second part (17) of the return conveyor device (12) is arranged in the direction of travel of the combine harvester (1) behind the first part (16) of the return conveyor device (12).

5. A combine harvester (1) according to claim 3 or claim 4 **characterised in that** the first part (16) of the return conveyor device (12) and the second part (17) of the return conveyor device (12) have a gradient of differing steepness, and preferably the first part (16) of the return conveyor device (12) is of a greater gradient than the second part (17) of the return conveyor device (12).

6. A combine harvester (1) according to one of the preceding claims **characterised in that** the first part (16) of the return conveyor device (12) and the second part (17) of the return conveyor device (12) overlap at their mutually facing ends (18, 19).

7. A combine harvester (1) according to one of the preceding claims **characterised in that** the second part (17) of the return conveyor device (12) is longer than the first part (16) of the return conveyor device (12), and preferably the second part (17) of the return conveyor device (12) is at least twice as long as the first part (16) of the return conveyor device (12), and further preferably the second part (17) of the return conveyor device (12) is at least three times as long as the first part (16) of the return conveyor device (12).

8. A combine harvester (1) according to one of the preceding claims **characterised in that** the separating device partial material flow (15) which is guided past the preparation tray (13) can be regulated by the second part (17) of the return conveyor device (12).

9. A combine harvester (1) according to claim 8 **characterised in that** the gradient of the second part (17) of the return conveyor device (12) is adjustable for regulating the separating device partial material flow (15) which is guided past the preparation tray (13).

10. A combine harvester according to one of the preceding claims **characterised in that** the combine harvester (1) has a drop stage (23) and the crop flow (24) is fed from the preparation tray (13) to the cleaning device (14) and the separating device partial material flow (14) which is guided past the preparation tray (13) is fed to the cleaning device (14) by way of the common drop stage (23).

11. A combine harvester according to one of the preceding claims **characterised in that** the cleaning device (14) comprises a cleaning fan (25) and in the drop stage (23) and/or cleaning device (14) the crop flow (24) from the preparation tray (13) to the cleaning device (14) passes closer to the cleaning fan (25) of the cleaning device (14) than the separating device partial material flow (15) which is guided past the preparation tray (13).

12. A combine harvester according to one of the preceding claims **characterised in that** the cleaning fan (25) has a housing (26) with a fan outlet (27) which is directed towards the crop flow (24) passing into the cleaning device (14).

## Revendications

1. Moissonneuse-batteuse (1) comprenant un système de battage (2), constitué d'un batteur (7) et d'un contre-batteur (8) pour battre du produit en grains (6) à partir du produit récolté ramassé, un flux de produit partiel de système de battage (4) en provenance du système de battage (2) pouvant être amené à au moins un rotor de séparation (10) ou à un dispositif de séparation (9) comportant un secoueur à éléments multiples pour séparer le produit en grains (6) du produit récolté battu, un flux de produit partiel de dispositif de séparation (11) en provenance du dispositif de séparation (9) pouvant être amené, par l'intermédiaire d'un équipement de retour (12) convoyant dans le sens de la marche et conformé en table de secouage pour convoyer le flux de produit partiel de dispositif de séparation (11), à une table de préparation (13) conformée en table de secouage entraînable et, par l'intermédiaire de la table de préparation (13), à l'équipement de nettoyage (14), **caractérisée en ce qu'**en outre, un flux de produit partiel de dispositif de séparation (15) en provenance du dispositif de séparation (9) peut être amené directement à l'équipement de nettoyage (14) à travers au moins une ouverture (12b) dans l'équipement de retour (12) en passant devant la table de préparation (13).

2. Moissonneuse-batteuse (1) selon la revendication 1, **caractérisée en ce que** l'équipement de retour (12) est conformé en deux parties.

3. Moissonneuse-batteuse (1) selon la revendication 2, **caractérisée en ce que** le flux de produit partiel de dispositif de séparation (11) guidé par l'intermédiaire de la table de préparation (13) peut être amené par l'intermédiaire d'une première partie (16) de l'équipement de retour (12) et ensuite par l'intermédiaire de la table de préparation (13), et **en ce que** le flux de produit partiel de dispositif de séparation (15) passant devant la table de préparation (13) peut être amenée par l'intermédiaire d'une seconde partie (17) de l'équipement de retour (12).

4. Moissonneuse-batteuse (1) selon la revendication 3, **caractérisée en ce que** la seconde partie (17) de l'équipement de retour (12) est disposée, dans le sens de la marche de la moissonneuse-batteuse (1), derrière la première partie (16) de l'équipement de retour (12).

5. Moissonneuse-batteuse (1) selon la revendication 3 ou 4, **caractérisée en ce que** la première partie (16) de l'équipement de retour (12) et la seconde partie (17) de l'équipement de retour (12) présentent une inclinaison différente, préférentiellement **en ce que** la première partie (16) de l'équipement de retour (12) présente une inclinaison supérieure à la seconde partie (17) de l'équipement de retour (12).

6. Moissonneuse-batteuse (1) selon une des revendications précédentes, **caractérisée en ce que** la première partie (16) de l'équipement de retour (12) et la seconde partie (17) de l'équipement de retour (12) se chevauchent au niveau de leurs extrémités (18, 19) tournées l'une vers l'autre.

7. Moissonneuse-batteuse (1) selon une des revendications précédentes, **caractérisée en ce que** la seconde partie (17) de l'équipement de retour (12) est plus longue que la première partie (16) de l'équipement de retour (12), préférentiellement **en ce que** la seconde partie (17) de l'équipement de retour (12) est deux fois plus longue que la première partie (16) de l'équipement de retour (12), plus préférentiellement **en ce que** la seconde partie (17) de l'équipement de retour (12) est au moins trois fois plus longue que la première partie (16) de l'équipement de retour (12).

8. Moissonneuse-batteuse (1) selon une des revendications précédentes, **caractérisée en ce que** le flux de produit partiel de dispositif de séparation (15) passant devant la table de préparation (13) est régulable par l'intermédiaire de la seconde partie (17) de l'équipement de retour (12).

9. Moissonneuse-batteuse (1) selon la revendication 8, **caractérisée en ce que** l'inclinaison de la seconde partie (17) de l'équipement de retour (12) est réglable pour réguler le flux de produit partiel de dispositif de séparation (15) passant devant la table de préparation (13).

10. Moissonneuse-batteuse selon une des revendications précédentes, **caractérisée en ce que** la moissonneuse-batteuse (1) comporte une cascade (23), et **en ce que** le flux de produit (24) de la table de préparation (13) à l'équipement de nettoyage (14) et le flux de produit partiel de dispositif de séparation (15) passant devant la table de préparation (13) sont amenés à l'équipement de nettoyage (14) par l'intermédiaire de la cascade commune (23).

11. Moissonneuse-batteuse selon une des revendications précédentes, **caractérisée en ce que** l'équipement de nettoyage (14) comporte un ventilateur de nettoyage (25) et, dans la cascade (23) et/ou dans l'équipement de nettoyage (14), le flux de produit (24) de la table de préparation (13) à l'équipement de nettoyage (14) a un écoulement plus dense au niveau du ventilateur de nettoyage (25) de l'équipement de nettoyage (14) que le flux de produit partiel de dispositif de séparation (15) passant devant la table de préparation (13).

12. Moissonneuse-batteuse selon une des revendications précédentes, **caractérisée en ce que** le ventilateur de nettoyage (25) comporte un carter (26) avec une sortie de ventilateur (27) qui est orientée vers le flux de produit (24) entrant dans l'équipement de nettoyage (14).
